# EUROPÄISCHE PATENTSCHRIFT

(11) **EP 3 600 850 B1**
(45) Veröffentlichungstag und Bekanntmachung des Hinweises auf die Patenterteilung: **16.09.2026**
(21) Anmeldenummer: 18709283.8
(22) Anmeldetag: 22.02.2018
(51) Int. Cl.: B29C 65/08, B29C 65/78, B60R 19/48, G01D 11/30, B29C 65/06, B29L 31/30

(54) **BAUTEIL ZUM VERBINDEN MIT MINDESTENS EINEM WEITEREN BAUTEIL, VERFAHREN ZUM VERBINDEN EINES BAUTEILS MIT MINDESTENS EINEM WEITEREN BAUTEIL UND VERBUNDTEIL**
PART FOR CONNECTION TO AT LEAST ONE FURTHER PART, METHOD FOR CONNECTING A PART TO AT LEAST ONE FURTHER PART, AND COMPOSITE PART
PIÈCE DESTINÉE À ÊTRE RELIÉE À AU MOINS UNE AUTRE PIÈCE, PROCÉDÉ DE LIAISON D'UNE PIÈCE À AU MOINS UNE AUTRE PIÈCE ET PIÈCE COMPOSITE

(30) Priorität: 24.03.2017 WO PCT/EP2017/057081
(43) Veröffentlichungstag der Anmeldung: 05.02.2020
(73) Patentinhaber: Telsonic Holding AG, 9552 Bronschhofen (CH)
(72) Erfinder: VIETZE, Axel, 8500 Frauenfeld (CH); SOLENTHALER, Peter, 9543 St. Margarethen (CH)
(74) Vertreter: Hepp Wenger Ryffel AG
(86) Internationale Anmeldenummer: PCT/EP2018/054380
(87) Internationale Veröffentlichungsnummer: WO 2018/172014

(56) Entgegenhaltungen:
- WO-A1-2015/164623
- DE-A1- 102014 226 955

## Beschreibung

Die vorliegende Erfindung befasst sich mit Bauteilen zum Verbinden mit mindestens einem weiteren Bauteil, mit Verfahren zum Verbinden von Bauteilen mit mindestens einem weiteren Bauteil und mit Verbundteilen.

Es ist bekannt, Bauteile mithilfe des linearen oder torsionalen Ultraschallschweissens oder mithilfe des Vibrationsschweissens miteinander zu verbinden. So offenbart beispielsweise die DE 10 2014 226 955 A1 die Verbindung eines Anbauteils mit einem Bauteil mittels Ultraschalls. Das Anbauteil weist einen mit dem Bauteil zu verschweissenden Schweissabschnitt auf, der eine Aufsetzfläche zum Kontakt mit einer Torsionssonotrode sowie eine gegenüberliegende Schweissfläche zur Verbindung mit dem Bauteil aufweist. Um die Ultraschallschwingungen möglichst auf den Schweissabschnitt zu beschränken, ist der Schweissabschnitt zumindest abschnittsweise von einer äusseren Schwingungsentkopplungszone umgeben und zumindest abschnittsweise durch eine ringförmige innere Schwingungsentkopplungszone begrenzt.

Das Dokument WO 2015/164623 A1 offenbart eine Vorrichtung zur Herstellung einer Automobil-Innenraumkomponente und ein Verfahren zu deren Herstellung. In einem Ausführungsbeispiel ist eine Vorrichtung dargestellt, mit der ein Vorsprung mittels Vibrationsschweissens an einem Substrat befestigt werden kann.

Bei vielen Bauteilen mit grossen Massen und/oder asymmetrischem Aufbau besteht dennoch das Risiko, dass aufgrund der Einleitung von Schwingungen (vor allem im Fall von Ultraschallschwingungen) in den Schweissabschnitt andere Abschnitte des Bauteils beschädigt werden. Insbesondere wenn schwingungssensitive Komponenten wie beispielsweise Elektronikkomponenten vorhanden sind, ist dies unbedingt zu vermeiden. Zudem kann vor allem bei grossen Bauteilen ein erheblicher Anteil der Schwingungsenergie aus dem Schweissabschnitt herausgeleitet werden und steht für das eigentliche Schweissen dann nicht mehr zur Verfügung. Hieraus kann eine unzureichende Schweissfestigkeit resultieren.

Es ist eine Aufgabe der vorliegenden Erfindung, die genannten Nachteile des Standes der Technik zu überwinden. Insbesondere soll das Risiko einer Beschädigung des Bauteils infolge der eingeleiteten Schwingungen reduziert oder sogar vollständig eliminiert werden. Überdies sollen auch Bauteile mit vergleichsweise grossen Massen und asymmetrische Bauteile zuverlässig verbunden werden können.

In einem ersten Aspekt der Erfindung wird diese Aufgabe gelöst durch ein Bauteil zum Verbinden mit mindestens einem weiteren Bauteil. Das Bauteil weist mindestens zwei Schweissabschnitte auf, die mit mindestens einem der weiteren Bauteile individuell mittels eines Schwingungsschweissens zu verschweissen sind. Als Schwingungsschweissen wird hier und im Folgenden ein Prozess verstanden, bei dem mit Hilfe von Schwingungen ein Schweissen erfolgt. Das Schwingungsschweissen kann ein Ultraschallschweissen sein, wie beispielsweise ein lineares Ultraschallschweissen oder ein torsionales Ultraschallschweissen. Alternativ kann es sich beim Schwingungsschweissen auch um ein Vibrationsschweissen handeln. Jeder der Schweissabschnitte weist eine jeweilige Schweissfläche zum Verbinden mit dem jeweiligen weiteren Bauteil auf. Dies umfasst sowohl die Möglichkeit, dass jeder Schweissabschnitt mit ein und demselben weiteren Bauteil verbunden wird, als auch die Möglichkeit, dass ein erster Schweissabschnitt mit einem ersten weiteren Bauteil verbunden wird und ein zweiter Schweissabschnitt mit einem zweiten weiteren Bauteil. Zudem ist erfindungsgemäss jeder Schweissabschnitt von jedem anderen Schweissabschnitt durch mindestens eine Schwingungsentkopplungszone räumlich getrennt.

Die Schwingungsentkopplungszone bewirkt, dass Schwingungsenergie, die in einen der Schweissabschnitte eingeleitet wird, nur in möglichst geringem Masse zu den anderen Schweissabschnitten transportiert wird und damit für das eigentliche Schweissen nicht mehr zur Verfügung steht. Da gemäss dem ersten Aspekt mindestens zwei individuell zu schweissende Abschnitte vorhanden sind, wird das Anwendungsspektrum deutlich erweitert. So lassen sich auch grosse und schwere Bauteile an mehreren Verbindungspunkten mit weiteren Bauteilen verbinden. Bei einem sequentiellen Verschweissen ist das Risiko verringert, beim Schweissen einer zweiten Verbindung eine bereits vorher erzeugte erste Verbindung zu beeinträchtigen.

Bevorzugt ist jeder Schweissabschnitt nicht nur von jedem anderen Schweissabschnitt durch eine Schwingungsentkopplungszone räumlich getrennt, sondern es ist jeder Schweissabschnitt vom gesamten restlichen Bauteil durch mindestens eine Schwingungsentkopplungszone räumlich getrennt. Folglich wird die Herausleitung von Schwingungsenergie nicht nur zu den anderen Schweissabschnitten, sondern zum gesamten restlichen Bauteil unterdrückt.

Der Mittelpunkt des Schweissabschnitts kann in einer zur Schweissfläche senkrechten Projektion einen (positiven) Abstand vom Schwerpunkt des Bauteils aufweisen. Unter dem Mittelpunkt des Schweissabschnitts wird dabei insbesondere der Schwerpunkt des Schweissabschnitts verstanden. Dieser Schwerpunkt muss nicht zwingend innerhalb des Schweissabschnitts liegen - beispielsweise, wenn der Schweissabschnitt ringförmig ausgebildet ist.

Mit anderen Worten stimmt der Mittelpunkt des Schweissabschnitts in einer zur Schweissfläche senkrechten Projektion nicht mit dem Schwerpunkt des Bauteils überein. Auch trotz dieser Asymmetrie verhindert die Schwingungsentkopplungszone wirkungsvoll, dass Schwingungsenergie aus dem Schweissabschnitt herausgeleitet wird, so dass die oben bereits erwähnten Vorteile erzielt werden können. Insbesondere wird vermieden, dass aufgrund der Asymmetrie des Bauteils unkontrollierbare Schwingungszustände entstehen, welche zur Beschädigung des Bauteils führen könnten.

Der genannte Abstand kann mindestens 1 %, bevorzugt mindestens 2 % und besonders bevorzugt mindestens 5 % des bezüglich des Mittelpunkts des Schweissabschnitts gemessenen Radius des Bauteils betragen. Unter dem bezüglich des Mittelpunkts des Schweissabschnitts gemessenen Radius des Bauteils wird der grösste Abstand sämtlicher Punkte des Bauteils vom Mittelpunkt des Schweissabschnitts verstanden. Auch trotz einer derartigen Asymmetrie verhindert die Schwingungsentkopplungszone effektiv die Herausleitung von Schwingungsenergie aus dem Schweissabschnitt.

Das bezüglich einer durch den Mittelpunkt des Schweissabschnitts und senkrecht zur Schweissfläche verlaufenden Achse bestimmte Trägheitsmoment des von der Stimmungsentkopplungszone eingeschlossenen Bereichs des Bauteils kann höchstens 50 %, bevorzugt höchstens 40 %, besonders bevorzugt höchstens 30 % des bezüglich der genannten Achse gemessenen Trägheitsmoments des gesamten Bauteils betragen. Das Schwingungsschweissen ist hierbei bevorzugt ein torsionales Schwingungsschweissen.

Die Masse des von der Schwingungsentkopplungszone eingeschlossenen Bereich des Bauteils kann höchstens 50 %, bevorzugt höchstens 40 %, besonders bevorzugt höchstens 30 % der Masse des gesamten Bauteils betragen. In diesem Fall ist das Schwingungsschweissen insbesondere ein lineares Schwingungsschweissen.

Mit anderen Worten ist also nur ein vergleichsweise kleiner Anteil des Trägheitsmoments bzw. der Masse von der Schwingungsentkopplungszone eingeschlossen. Die Schwingungsentkopplungszone bewirkt allerdings, dass kein übermässiger Anteil der Schwingungsenergie in den verbleibenden, grösseren und entkoppelten Bereich des Bauteils abgeleitet wird, so dass ein grosser Anteil der Schwingungsenergie für das eigentliche Schweissen zur Verfügung steht und die mittels der Schwingungsentkopplungszone entkoppelte Masse nicht oder nur wenig mit Schwingungen beaufschlagt wird.

In vielen Ausführungsformen bildet der von der Schwingungsentkopplungszone eingeschlossene Bereich einen inneren Bereich und die mittels der Schwingungsentkopplungszone entkoppelte Bereich einen äusseren Bereich - beispielsweise, wenn der Schweissbereich kreisförmig ist und die Schwingungsentkopplungszone ringförmig darum angeordnet ist. Allerdings ist es auch denkbar und liegt im Rahmen der Erfindung, dass der Schweissbereich ringförmig ist und die Schwingungsentkopplungszone ebenfalls ringförmig und innerhalb des Schweissbereich angeordnet ist; in diesem Fall bildet im Rahmen der vorliegenden Erfindung der eingeschlossene Bereich einen äusseren Bereich, und der entkoppelte Bereich bildet einen inneren Bereich. Ebenfalls ist es von der Erfindung erfasst, dass - wie in DE 10 2014 226 955 A1 - der Schweissabschnitt zumindest abschnittsweise von einer äusseren Schwingungsentkopplungszone umgeben und zumindest abschnittsweise durch eine ringförmige innere Schwingungsentkopplungszone begrenzt ist; dann ist der eingeschlossene Bereich ringförmig, und der entkoppelte Bereich setzt sich aus einem inneren Bereich und einem äusseren, ringförmigen Bereich zusammen.

Der Schweissabschnitt kann vom restlichen Bauteil durch die mindestens eine Schwingungsentkopplungszone derart räumlich getrennt sein, dass bei einer Schwingungsanregung des Bauteils im Schweissabschnitt der Anteil der zeitlich gemittelten Schwingungsenergie des ausserhalb der Schwingungsentkopplungszone liegenden entkoppelten Bereichs des Bauteils an der zeitlich gemittelten Schwingungsenergie des gesamten Bauteils aufgrund der Schwingungsentkopplungszone reduziert wird, und zwar von mehr als 50 %, bevorzugt mehr als 60 %, besonders bevorzugt mehr als 70 % auf weniger als 30 %, bevorzugt weniger als 20 %, besonders bevorzugt weniger als 10 %.

Mit anderen Worten wird ein gegebenes erfindungsgemässes Bauteil mit einem hypothetischen Vergleichsbauteil verglichen, welches im Wesentlichen mit dem erfindungsgemässen Bauteil übereinstimmt, jedoch keine Schwingungsentkopplungszone aufweist. Das Vergleichsbauteil wird im Schweissabschnitt zu Schwingungen angeregt, wobei in einem eingeschlossenen Bereich (der dem innerhalb der Schwingungsentkopplungszone des erfindungsgemässen Bauteils liegenden Bereich entspricht) und in einem entkoppelten Bereich (der dem ausserhalb der Schwingungsentkopplungszone liegenden Bereich des erfindungsgemässen Bauteils entspricht) Schwingungen mit einer zeitlich gemittelten eingeschlossenen bzw. entkoppelten Schwingungsenergie entstehen. Auch das erfindungsgemässe Bauteil mit Schwingungsentkopplungszone hat bei gleicher Schwingungsanregung im Schweissabschnitt im entkoppelten Bereich eine zeitlich gemittelte Schwingungsenergie. Gemäss dem vierten Aspekt der Erfindung beträgt beim Vergleichsbauteil der zeitlich gemittelten Schwingungsenergie im entkoppelten Bereich mehr als 50 % (bevorzugt mehr als 60 % und besonders bevorzugt mehr als 70 %) der zeitlich gemittelten Schwingungsenergie des gesamten Bauteils. Beim erfindungsgemässen Bauteil mit Schwingungsentkopplungszone ist dieser Anteil aufgrund der Schwingungsentkopplungszone auf weniger als 30 % (bevorzugt weniger als 20 % und besonders bevorzugt weniger als 10 %) reduziert.

Die Schwingungsentkopplungszone sorgt also auch in diesem vierten Aspekt dafür, dass die Herausleitung von Schwingungsenergie aus dem eingeschlossenen Bereich heraus unterdrückt wird.

Die genannte Reduktion des Anteils der zeitlich gemittelten Schwingungsenergie kann insbesondere auftreten, wenn die Schwingungsanregung mit einer Frequenz erfolgt, die im Bereich von 10 kHz bis 50 kHz, bevorzugt im Bereich von 20 kHz bis 40 kHz liegt und besonders bevorzugt etwa 20 kHz ist; hierbei handelt es sich um typische Ultraschallfrequenzen. Alternativ oder zusätzlich kann die genannte Reduktion auftreten, wenn die Schwingungsanregung mit einer Frequenz erfolgt, die im Bereich von 150 Hz bis 250 Hz liegt und bevorzugt etwa 200 Hz ist; dies sind die typischerweise beim Vibrationsschweissen verwendeten Frequenzen.

Der Schweissabschnitt, insbesondere jeder Schweissabschnitt, kann eine jeweilige Aufsetzfläche zum Kontakt mit einem Schwinger aufweisen. Über diese Aufsetzfläche können Schwingungen in das Bauteil eingeleitet werden. Bei dem Schwinger kann es sich um eine Sonotrode wie etwa eine Torsionssonotrode handeln.

Mindestens eine der Schwingungsentkopplungszonen kann eine federnde Struktur enthalten oder dadurch gebildet sein, mittels welcher die Ausbreitung von Schwingungen, die in einen Schweissabschnitt eingeleitet werden, in einen zweiten Abschnitt, insbesondere in einem zweiten Schweissabschnitt, des Bauteils zumindest teilweise verhindert wird. Die Schwingungen können entweder direkt über den Schwinger, also beispielsweise über die Sonotrode, in die Aufsetzfläche eingeleitet werden oder indirekt über das weitere Bauteil.

Bei der federnden Struktur kann es sich um eine geometrisch federnde Struktur handeln, die beispielsweise mindestens eine Sicke enthält oder dadurch gebildet ist. Eine solche geometrisch federnde Struktur ist vergleichsweise einfach herstellbar. Sind mehrere Sicken vorhanden, so können diese beispielsweise linear ausgebildet und parallel zueinander angeordnet sein, oder sie können kreisförmig oder elliptisch ausgebildet sein und konzentrisch angeordnet sein. Alternativ sind natürlich auch viele andere Formen und Anordnungen der Sicken denkbar und von der Erfindung erfasst, sofern sie eine Schwingungsentkopplung bewirken.

Alternativ oder zusätzlich kann mindestens eine der Schwingungsentkopplungszonen durch mindestens eine Entkopplungsöffnung und/oder mindestens eine Materialausdünnung gebildet sein. Eine Entkopplungsöffnung durchdringt das Bauteil vollständig, während eine Materialausdünnung das Bauteil nicht vollständig durchdringt. Die einzelnen Entkopplungsöffnungen und Materialausdünnungen können beispielsweise rund, halbrund, oval, elliptisch, halbmondförmig oder drei- oder mehreckig mit Spitzen oder runden Ecken sein oder auch eine beliebige andere Form aufweisen, die aus konkaven und/oder konvexen Bogenformen ohne oder in Kombination mit geraden Teilstrecken zusammengesetzt sind. Sind mehrere Entkopplungsöffnungen und/oder Materialausdünnungen vorhanden, so können diese beispielsweise parallel oder konzentrisch zueinander angeordnet sein.

Es ist ebenfalls denkbar und liegt im Rahmen der Erfindung, dass mindestens eine der Schwingungsentkopplungszonen aus einem anderen Material besteht als zumindest ein Teil des restlichen Bauteils. Beispielsweise kann mindestens eine der Schwingungsentkopplungszonen aus einem Material bestehen, dessen Elastizitätsmodul kleiner ist als der Elastizitätsmodul des Materials zumindest eines Teils des restlichen Bauteils. Auch auf diese Weise kann die Herausleitung von Schwingungsenergie aus dem Schweissabschnitt heraus verhindert oder zumindest reduziert werden. Bauteile, deren Schwingungsentkopplungszone aus einem anderen Material besteht als zumindest ein Teil des restlichen Bauteils, können beispielsweise durch Mehrkomponenten-, insbesondere Zweikomponenten-Spritzguss oder durch Mehrkomponenten-, insbesondere Zweikomponenten-Extrusion hergestellt werden.

Mindestens ein Schweissabschnitt kann zumindest abschnittsweise eine innere Schwingungsentkopplungszone umgeben, so wie dies beispielsweise in der DE 10 2014 226 955 A1 offenbart ist. Die innere Schwingungsentkopplungszone kann zumindest abschnittsweise einen inneren Bauteilabschnitt umgeben, der einen Durchbruch aufweist. Weiterhin kann mindestens ein Schweissabschnitt zumindest abschnittsweise von einer äusseren Schwingungsentkopplungszone umgeben sein. Die Schweissfläche zumindest eines der Schweissabschnitte kann durch mindestens eine sich vom Schweissabschnitt erstreckende Rippe gebildet sein. Bezüglich dieser Details wird auf die genannte Patentanmeldung DE 10 2014 226 955 A1 verwiesen, deren diesbezügliche Offenbarung hiermit in die vorliegende Anmeldung aufgenommen wird.

Der Schweissabschnitt, insbesondere jeder Schweissabschnitt, kann auf einer ersten Seite des Bauteils eine erste Schweissfläche zum Verbinden mit einem ersten weiteren Bauteil aufweisen und auf einer zweiten Seite des Bauteils eine zweite Schweissfläche zum Verbinden mit einem zweiten weiteren Bauteil. Auf diese Weise kann das die Schwingungsentkopplungszone enthaltende Bauteil zwischen zwei weitere Bauteile geschweisst werden, ohne dass diese beiden weiteren Bauteile selbst über Schwingungsentkopplungszonen verfügen müssen.

Das Bauteil und/oder das weitere Bauteil können beispielsweise aus einem Kunststoff oder aus einem Metall bestehen.

Die Schweissfläche kann einen Durchmesser aufweisen, der im Bereich von 20 mm von 40 mm liegt.

Der Schwerpunkt des Bauteils kann ausserhalb der Schweissfläche liegen oder sogar ausserhalb des die Schweissfläche enthaltenden Schweissabschnitts. Selbst dann verhindert die Schwingungsentkopplungszone eine übermässige Ableitung von Schwingungsenergie aus dem Schweissabschnitt und unkontrollierbare Schwingungszustände.

Das Bauteil ist bevorzugt ein Bauteil für ein Kraftfahrzeug, insbesondere ein Aussen- oder Innenverkleidungsteil eines Kraftfahrzeugs. Dabei kann es sich um einen Stossfänger, eine Seitenverkleidung, einen Spoiler, ein Dekorteil, einen Blindstopfen, eine Blende, einen Schweller, eine Bremskühlung, eine Scheinwerferreinigungsanlage oder ein Befestigungsmittel zum Befestigen eines Funktionsteils, beispielsweise eines Sensors, insbesondere eines Abstandssensors handeln. Denkbar ist auch, dass das Bauteil ein Bauteil zum Befestigen einer passiven Komponente, insbesondere eines Dekorteils, Blindstopfens oder einer Blende, ist.

Des Weiteren umfasst die vorliegende Erfindung auch ein Verfahren zum Verbinden eines wie oben offenbarten Bauteils mit mindestens einem weiteren Bauteil, wobei der Schweissabschnitt des Bauteils, insbesondere jeder Schweissabschnitt des Bauteils, und/oder ein Schweissbereich des weiteren Bauteils eine Aufsetzfläche zum Kontakt mit einem Schwinger aufweist. Wie oben bereits erläutert kann es sich bei dem Schwinger beispielsweise um eine Sonotrode wie etwa eine Torsionssonotrode handeln. Eine Aufsetzfläche kann also nur an den erfindungsgemässen Bauteil mit Schwingungsentkopplungszone vorhanden sein oder nur an dem weiteren Bauteil, welches nicht zwingend eine Schwingungsentkopplungszone aufweisen muss, oder sowohl am Bauteil als auch am weiteren Bauteil.

Das Verfahren enthält die folgenden Schritte:
a) Inkontaktbringen der Schweissfläche des Bauteils mit einem Schweissbereich des weiteren Bauteils,
b) Ausüben einer Kraft mittels eines Schwingers, insbesondere einer Sonotrode, insbesondere einer Torsionssonotrode, auf die Aufsetzfläche, so dass die Schweissfläche und der Schweissbereich gegeneinandergedrückt werden und
c) Einleiten einer Schwingung, insbesondere einer Ultraschallschwingung, mittels des Schwingers, so dass die Schweissfläche mit dem Schweissbereich verschweisst wird.

Bei der Durchführung dieses Verfahrens ergeben sich die oben bereits erläuterten Vorteile.

Bei dem Bauteil kann es sich um ein Bauteil handeln, bei dem der Mittelpunkt des Schweissabschnitts (in einer zur Schweissfläche senkrechten Projektion einen Abstand vom Schwerpunkt des Bauteils aufweist, wobei der Abstand insbesondere mindestens 1 %, bevorzugt mindestens 2 %, besonders bevorzugt mindestens 5 % des bezüglich des Mittelpunkts des Schweissabschnitts gemessenen Radius des Bauteils beträgt.. In diesem Fall ist es besonders vorteilhaft, wenn im Schritt c) eine torsionale Schwingung, insbesondere eine torsionale Ultraschallschwingung, bezüglich einer Torsionsachse eingeleitet wird, welche durch den Mittelpunkt des Schweissabschnitts oder in einem Abstand von höchstens 20 mm, bevorzugt höchstens 10 mm, besonders bevorzugt höchstens 5 mm davon verläuft.

Alternativ kann im Schritt c) auch eine lineare Schwingung, insbesondere eine lineare Ultraschallschwingung, eingeleitet werden, wobei die senkrechte Projektion des Mittelpunkts des Schweissabschnitts auf die Aufsetzfläche im Mittelpunkt einer Schweissfläche des Schwingers oder in einem Abstand von höchstens 20 mm, bevorzugt höchstens 10 mm, besonders bevorzugt höchstens 5 mm davon liegt. Die lineare Schwingung und die torsionale Schwingung erfolgt insbesondere in einer Ebene parallel zur Schweissfläche.

Der Schwinger kann eine Symmetrieachse aufweisen, die beispielsweise mit der Torsionsachse eines Torsionsschwingers übereinstimmen kann. Diese Symmetrieachse kann durch den Mittelpunkt des Schweissabschnitts oder in einem Abstand von höchstens 20 mm, bevorzugt höchstens 10 mm, besonders bevorzugt höchstens 5 mm davon verlaufen.

Der Schwinger kann eine Schwingung mit einer Frequenz einleiten, bei welcher die zeitlich gemittelte Schwingungsenergie des ausserhalb der Schwingungsentkopplungszone liegenden entkoppelten Bereichs des Bauteils aufgrund der Schwingungsentkopplungszone reduziert wird, und zwar von mehr als 50 %, bevorzugt von mehr als 60 %, bevorzugt mehr als 70 % auf weniger als 30 %, bevorzugt weniger als 20 %, besonders bevorzugt weniger als 10 %. Damit ergeben sich ebenfalls die bereits oben genannten Vorteile.

Die Schwingungsentkopplungszone des Bauteils kann in mindestens einer Richtung in einem Abstand von der Aufsetzfläche angeordnet sein, der weniger als ein Achtel der Wellenlänge des Schwingers im Bereich der Schweissfläche beträgt. Die Schwingungsentkopplungszone sorgt dafür, dass weniger Schwingungsenergie aus dem Schweissabschnitt herausgeleitet wird. Die genannte Richtung kann beispielsweise senkrecht zur Aufsetzfläche und/oder zur Schweissfläche verlaufen. Bevorzugt liegt die Wellenlänge des Schwingers im Bereich von 20 mm bis 35 mm.

Das weitere Bauteil (welches nicht zwingend über eine Schwingungsentkopplungszone verfügen muss) oder das erfindungsgemässe Bauteil mit Schwingungsentkopplungszone kann ein Bauteil für ein Kraftfahrzeug, insbesondere ein Aussen- oder Innenverkleidungsteil eines Kraftfahrzeugs sein, beispielsweise ein Stossfänger, eine Seitenverkleidung, ein Spoiler, ein Dekorteil, ein Blindstopfen, eine Blende, ein Schweller, eine Bremskühlung oder eine Scheinwerferreinigungsanlage. Das erfindungsgemässe Bauteil mit Schwingungsentkopplungszone oder das weitere Bauteil (welches nicht zwingend eine Schwingungsentkopplungszone aufweisen muss) kann ein Befestigungsmittel zum Befestigen eines Funktionsteils sein, beispielsweise eines Sensors, insbesondere eines Abstandssensors. Insbesondere kann mit dem erfindungsgemässen Verfahren also beispielsweise eine Halterung für einen Abstandssensor an einen Stossfänger geschweisst werden, wobei nur die Halterung oder nur der Stossfänger oder beide über eine Schwingungsentkopplungszone verfügen. Das erfindungsgemässe Bauteil mit Schwingungsentkopplungszone oder das weitere Bauteil (welches nicht zwingend eine Schwingungsentkopplungszone aufweisen muss) kann aber auch ein Befestigungsmittel zum Befestigen einer passiven Komponente, insbesondere eines Dekorteils, Blindstopfens oder einer Blende, sein.

In einem letzten Aspekt betrifft die Erfindung auch ein Verbundteil, welches ein erfindungsgemässes Bauteil und ein weiteres Bauteil enthält. Die Schweissfläche des Bauteils ist mit einem Schweissbereich des weiteren Bauteils verschweisst, insbesondere mittels eines Ultraschallschweissens, bevorzugt eines torsionalen Ultraschallschweissens. Insbesondere kann das Verbundteil in einem erfindungsgemässen Verfahren hergestellt sein. Beispielsweise kann das weitere Bauteil oder das Bauteil ein Bauteil für ein Kraftfahrzeug, insbesondere ein Aussen- oder Innenverkleidungsteil eines Kraftfahrzeugs sein, beispielsweise ein Stossfänger, eine Seitenverkleidung, ein Spoiler, ein Dekorteil, ein Blindstopfen, eine Blende, ein Schweller, eine Bremskühlung oder eine Scheinwerferreinigungsanlage und/oder das Bauteil oder das weitere Bauteil kann ein Befestigungsmittel zum Befestigen eines Funktionsteils, beispielsweise eines Sensors, insbesondere eines Abstandssensors oder eines wie vorstehend beschriebenen passiven Bauteils, sein. Ein mittels torsionalen Ultraschallschweissens verbundenes Verbundteils lässt sich aufgrund einer besonders glatten Oberflächenstruktur im Bereich der Schweissung erkennen und von einem mittels linearen Ultraschallschweissens verbundenen Verbundteils unterscheiden.

Nachfolgend wird die Erfindung anhand mehrerer Ausführungsbeispiele erläutert. Dabei zeigen
- Figur 1a:: eine Draufsicht auf ein erstes erfindungsgemässes Bauteil mit zwei Schweissabschnitten;
- Figur 1b:: eine Seitenansicht auf das erste erfindungsgemässe Bauteil;
- Figur 1c:: eine Seitenansicht auf das erste erfindungsgemässe Bauteil mit zwei damit verschweissten weiteren Bauteilen;
- Figur 2a:: eine Seitenansicht auf ein zweites erfindungsgemässes Bauteil mit einer Sicke;
- Figur 2b:: eine Draufsicht auf das zweite erfindungsgemässe Bauteil;
- Figur 3a:: eine seitliche Schnittansicht auf ein drittes erfindungsgemässes Bauteil aus zwei Materialien mit verschiedenen Elastizitätsmodulen;
- Figur 3b:: eine Draufsicht auf das dritte erfindungsgemässe Bauteil;
- Figur 4:: eine Seitenansicht auf ein viertes erfindungsgemässes Bauteil, welches an beiden Seiten mit einem weiteren Bauteil verschweisst ist;
- Figur 5:: eine Seitenansicht auf ein erstes erfindungsgemässes Verfahren, bei dem ein erfindungsgemässes Bauteil eine Aufsetzfläche für eine Torsionssonotrode aufweist;
- Figur 6:: eine Seitenansicht auf ein zweites erfindungsgemässes Verfahren, bei dem ein weiteres Bauteil eine Aufsetzfläche für eine Linearsonotrode aufweist;
- Figur 7:: eine Seitenansicht auf ein fünftes erfindungsgemässes Bauteil;
- Figur 8:: eine Seitenansicht auf ein erfindungsgemässes Verbundteil;
- Figur 9:: eine Seitenansicht auf ein sechstes erfindungsgemässes Bauteil;
- Figur 10:: eine Seitenansicht auf ein siebtes erfindungsgemässes Bauteil;
- Figur 11:: eine Seitenansicht auf ein achtes erfindungsgemässes Bauteil;
- Figur 12:: eine Draufsicht auf ein neuntes erfindungsgemässes Bauteil.

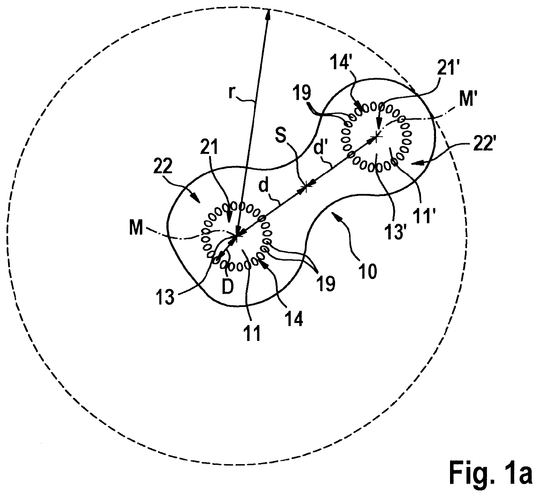

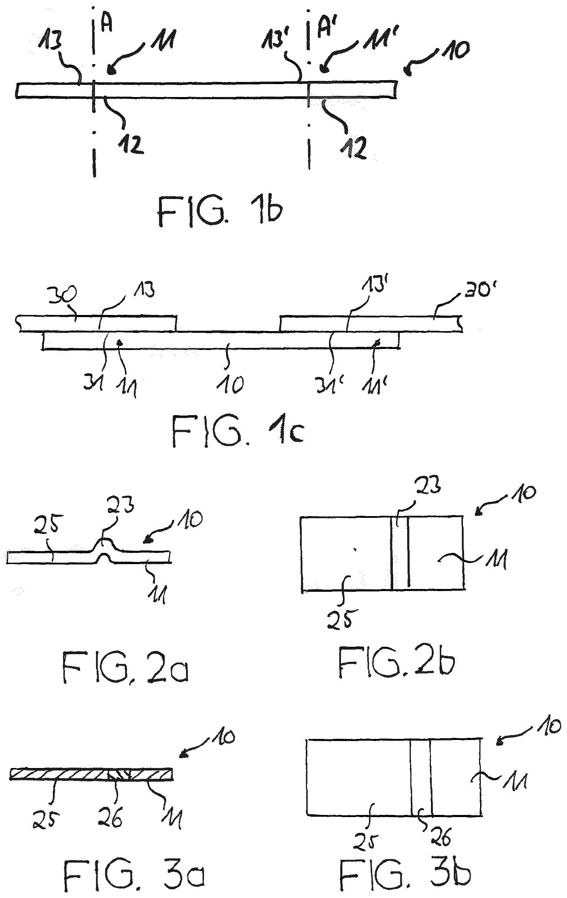

In den Figuren 1a bis 1c ist ein erstes erfindungsgemässes Bauteil 10 zum Verbinden mit zwei weiteren Bauteilen 30 dargestellt. Das Bauteil 10 kann aus einem Kunststoff oder aus einem Metall bestehen. Das Bauteil 10 enthält zwei Schweissabschnitte 11, 11', die mit einem jeweiligen weiteren Bauteil 30, 30' verschweisst werden sollen, beispielsweise mittels eines torsionalen Ultraschallschweissens. Jeder der Schweissabschnitte 11, 11' verfügt über eine jeweilige Schweissfläche 13, 13' zum Verbinden mit dem jeweiligen weiteren Bauteil 30, 30'. Die Schweissflächen 13, 13' weisen einen Durchmesser D auf, der im Bereich von 20 mm bis 40 mm liegen kann.

Ausserdem verfügen beide Schweissabschnitte 11, 11'über eine jeweilige Aufsetzfläche 12, 12' zum Kontakt mit einem Schwinger, mit dem Ultraschallschwingungen eingeleitet werden können. Bei dem Schwinger kann es sich beispielsweise um eine Torsionssonotrode handeln.

Beide Schweissabschnitte 11, 11' sind durch eine jeweilige Schwingungsentkopplungszone 14, 14' vom restlichen Bauteil räumlich getrennt, also insbesondere vom jeweils anderen Schweissabschnitt 11', 11. Die Schweissabschnitte 11, 11' weisen jeweils einen Mittelpunkt M, M' auf, der mit dem jeweiligen Schwerpunkt des Schweissabschnitts 11, 11' übereinstimmt. Beide Schwingungsentkopplungszonen 14, 14' sind durch eine Vielzahl von Entkopplungsöffnungen 19, 19' gebildet, die das Bauteil 10 vollständig durchdringen, eine ovale Form aufweisen und kreisringförmig um den Mittelpunkt M des Schweissabschnitts 11 angeordnet sind. Anstelle von Entkopplungsöffnungen 19 könnten auch lediglich Materialausdünnungen vorgesehen sein, die das Bauteil 10 nicht vollständig durchdringen.

In einer zur Schweissfläche 13 senkrechten Projektion (also in der Zeichenebene der Figur 1a) haben die Mittelpunkte M, M' der Schweissabschnitte 11, 11' einen jeweiligen Abstand d, d' vom Schwerpunkt S des gesamten Bauteils 10. Der Abstand d beträgt mehr als 5 % des bezüglich des Mittelpunkts M des Schweissabschnitts 11 gemessenen Radius r des Bauteils 10. Unter dem Radius r wird dabei wie oben der grösste Abstand sämtlicher Punkte des Bauteils 10 vom Mittelpunkt M des Schweissabschnitts 11 verstanden. Analog beträgt auch der Abstand d' beträgt mehr als 5 % des bezüglich des Mittelpunkts M' des Schweissabschnitts 11' gemessenen Radius des Bauteils 10. Im hier gezeigten Ausführungsbeispiel liegt auch der Schwerpunkt S des Bauteils 10 ausserhalb beider Schweissabschnitte 11, 11'.

Bezüglich einer durch den Mittelpunkt M des Schweissabschnitts 11 und senkrecht zur Schweissfläche 13 verlaufenden Achse A hat das gesamte Bauteil 10 ein Trägheitsmoment. Bezüglich der gleichen Achse A hat auch der innerhalb der Schwingungsentkopplungszone 14 liegende eingeschlossene Bereich 21 ein Trägheitsmoment, welches weniger als 30 % des Trägheitsmoments des gesamten Bauteils 10 beträgt. Analog hat bezüglich einer Achse A' der innerhalb der Schwingungsentkopplungszone 14' liegende eingeschlossene Bereich 21' ein Trägheitsmoment, welches weniger als 30 % des Trägheitsmoments des gesamten Bauteils 10 beträgt.

Zudem beträgt die Masse des innerhalb der Schwingungsentkopplungszone 14 liegenden eingeschlossenen Bereichs 21 weniger als 30 % der Masse des gesamten Bauteils 10, und auch die Masse des innerhalb der Schwingungsentkopplungszone 14' liegenden eingeschlossenen Bereichs 21' beträgt weniger als 30 % der Masse des gesamten Bauteils 10.

Aufgrund der Schwingungsentkopplungszone 14 wird bei einer Schwingungsanregung des Bauteils 10 im Schweissabschnitt 11 der Anteil der zeitlich gemittelten Schwingungsenergie des ausserhalb der Schwingungsentkopplungszone 14 liegenden entkoppelten Bereichs 22 des Bauteils 10 an der zeitlich gemittelten Schwingungsenergie des gesamten Bauteils 10 von mehr als 50 % auf weniger als 30 % reduziert. Analog wird bei einer Schwingungsanregung des Bauteils 10 im Schweissabschnitt 11' der Anteil der zeitlich gemittelten Schwingungsenergie des ausserhalb der Schwingungsentkopplungszone 14' liegenden entkoppelten Bereichs 22' des Bauteils 10 an der zeitlich gemittelten Schwingungsenergie des gesamten Bauteils 10 von mehr als 50 % auf weniger als 30 % reduziert. Dies gilt beispielsweise bei einer typischen Ultraschallfrequenz von etwa 20 kHz. Zur Verwendung des Vibrationsschweissens könnte die Frequenz auch etwa 200 Hz betragen.

Das in Figur 2 gezeigte zweite erfindungsgemässe Bauteil 10 weist nur eine einzige Schwingungsentkopplungszone 23 auf, die als Sicke 23 ausgestaltet ist. Diese Sicke 23 bildet eine geometrisch federnde Struktur und verhindert zumindest teilweise die Ausbreitung von Schwingungen in einem Schweissabschnitt 11 in einen zweiten Abschnitt 25 des Bauteils 10.

Im dritten Ausführungsbeispiel gemäss den Figuren 3a und 3b enthält das Bauteil 10 eine Schwingungsentkopplungszone 26, die aus einem anderen Material besteht als das restliche Bauteil. Konkret ist der Elastizitätsmodul der Schwingungsentkopplungszone 26 kleiner als der Elastizitätsmodul des restlichen Bauteils 10. Ein solches Bauteil 10 kann beispielsweise durch Zweikomponenten-Spritzguss oder durch Zweikomponenten-Extrusion hergestellt werden.

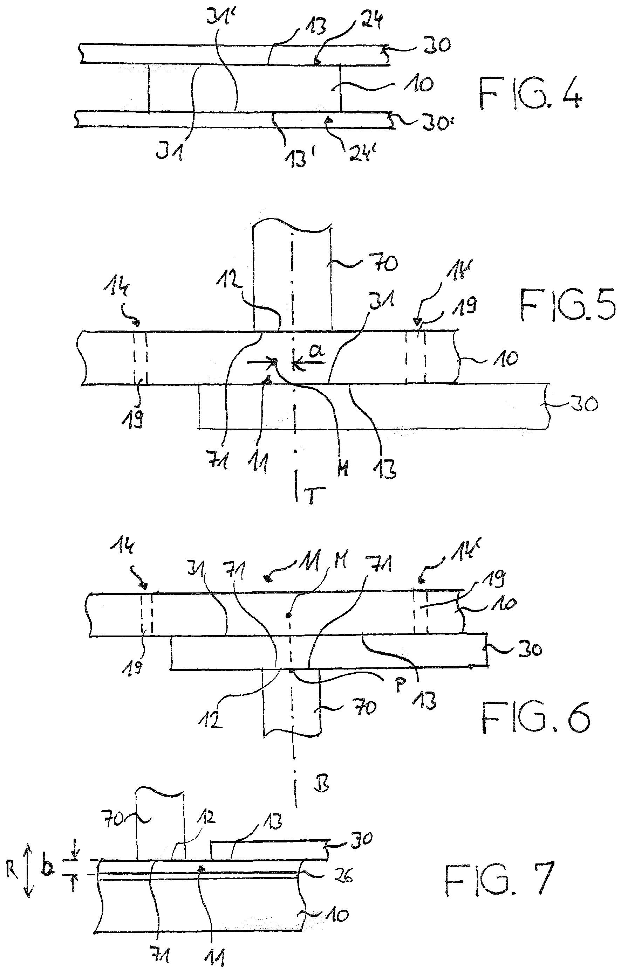

Die Figur 4 zeigt ein weiteres erfindungsgemässes Bauteil 10 mit einer auf einer ersten Seite 24 angeordneten ersten Schweissfläche 13 zum Verbinden mit einem ersten weiteren Bauteil 30 sowie einer auf einer zweiten Seite 24' des Bauteils 10 angeordneten zweiten Schweissfläche 13' zum Verbinden mit einem zweiten weiteren Bauteil 30', wobei die Schwingungsentkopplungszonen nicht explizit dargestellt sind.

In Figur 5 ist ein Schritt eines erfindungsgemässen Verfahrens zum Verbinden eines Bauteils 10 mit einem weiteren Bauteil 30 dargestellt. Hier enthält das Bauteil 10 sowohl einen Schweissabschnitt 11 und eine Schwingungsentkopplungszone 14 als auch eine Aufsetzfläche 12 zum Kontakt mit einer Sonotrode 70. Dabei handelt es sich in diesem Beispiel um eine Torsionssonotrode 70, die eine torsionale Schwingung um eine Torsionsachse T durchführen kann und eine Schweissfläche 71 aufweist. Die Schweissfläche 13 des Bauteils 10 wird mit einem Schweissbereich 31 des weiteren Bauteils 30 in Kontakt gebracht. Anschliessend wird mittels der Torsionssonotrode 70 auf die Aufsetzfläche 12 eine Kraft ausgeübt, so dass die Schweissfläche 13 und der Schweissbereich 31 gegeneinandergedrückt werden. Anschliessend wird mittels der Torsionssonotrode 70 eine Ultraschallschwingung eingeleitet, so dass die Schweissfläche 13 mit dem Schweissbereich 31 verschweisst wird. Dabei verläuft die Torsionsachse T in einem Abstand a von höchstens 20 mm vom Mittelpunkt M des Schweissabschnitts 11.

In Figur 6 ist eine Variante dargestellt, in der nicht das erfindungsgemässe Bauteil 10 eine Aufsetzfläche 12 für einen Schwinger 70 enthält, sondern das weitere Bauteil 30. In einem weiteren Unterschied handelt es sich bei dem Schwinger 70 hier um eine Linearsonotrode 70, mit der eine lineare Ultraschallschwingung eingeleitet wird. Die Linearsonotrode 70 verfügt über eine Schweissfläche 71 mit einem Mittelpunkt P. Die lineare Ultraschallschwingung kann parallel oder senkrecht zur Aufsetzfläche 12 erfolgen. Die senkrechte Projektion des Mittelpunkts M des Schweissabschnitts 13 auf die Aufsetzfläche 12 liegt im Mittelpunkt P dieser Schweissfläche 71. Es ist jedoch auch denkbar, dass die genannte senkrechte Projektion in einem Abstand vom Mittelpunkt P liegt, der höchstens 20 mm ist.

Die Linearsonotrode 70 hat eine Symmetrieachse B, die durch den Mittelpunkt P der Schweissfläche 71 verläuft. Das Bauteil 10 und die Sonotrode 70 sind jeweils derart aufeinander abgestimmt, dass Schwingungen mit einer Frequenz eingeleitet werden können, bei welcher die zeitlich gemittelte Schwingungsenergie des ausserhalb der Schwingungsentkopplungszone 14 liegenden entkoppelten Bereichs 22 des Bauteils 10 aufgrund der Schwingungsentkopplungszone 14 von mehr als 50 % auf weniger als 30 % reduziert wird.

Ein weiteres erfindungsgemässes Verfahren ist in Figur 7 dargestellt. In einer Richtung R, die senkrecht zur Aufsetzfläche 12 und zur Schweissfläche 13 des Bauteils 10 verläuft, ist die Schwingungsentkopplungszone 26 aus einem anderen Material in einem Abstand b von der Aufsetzfläche 12 angeordnet, der weniger als ein Achtel der Wellenlänge der Sonotrode 70 im Bereich der Schweissfläche 13 beträgt. Die Wellenlänge kann dabei im Bereich von 20 mm bis 35 mm liegen.

Das weitere Bauteil 30 oder das Bauteil 10 kann ein Aussen- oder Innenverkleidungsteil eines Kraftfahrzeugs sein, beispielsweise ein Stossfänger, eine Seitenverkleidung, ein Spoiler, ein Schweller, eine Bremskühlung oder eine Scheinwerferreinigungsanlage. Das Bauteil 10 oder das weitere Bauteil 30 kann ein Befestigungsmittel zum Befestigen eines Funktionsteil, beispielsweise eines Abstandssensors, sein.

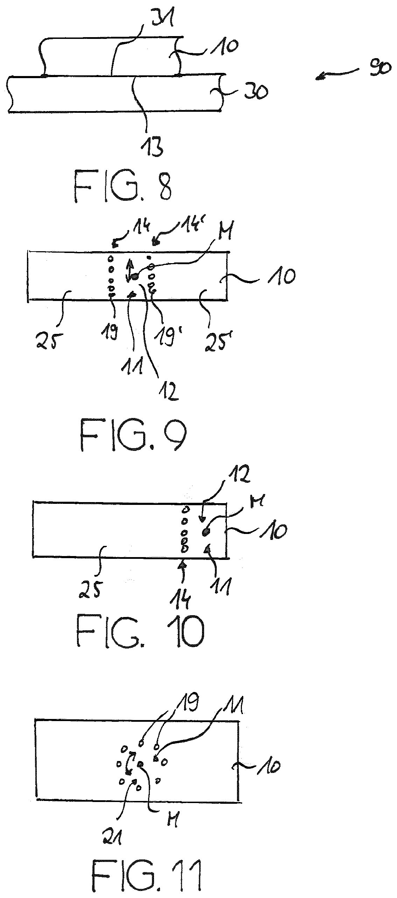

Figur 8 zeigt beispielhaft ein Verbundteil 90, welches mittels eines erfindungsgemässen Verfahrens aus einem erfindungsgemässen Bauteil 10 und einem weiteren Bauteil 30 hergestellt wurde.

In Figur 9 ist ein weiteres erfindungsgemässes, rechteckiges Bauteil 10 dargestellt, bei welchem ein zentrierter Schweissabschnitt 11 durch zwei Schwingungsentkopplungszonen 14, 14' von zwei zweiten Abschnitten 25, 25' räumlich getrennt ist. Die Schwingungsentkopplungszonen 14, 14' sind hier jeweils durch eine Reihe von Entkopplungsöffnungen 19 gebildet. In die Aufsetzfläche 12 kann eine lineare Ultraschallschwingung in der durch einen Doppelpfeil dargestellten Richtung eingeleitet werden. Die Masse des zwischen den Schwingungsentkopplungszonen 14, 14' liegenden eingeschlossenen Bereichs beträgt weniger als 30 % der Masse des gesamten Bauteils 10.

Das in Figur 10 gezeigte erfindungsgemässe, ebenfalls rechteckige Bauteil 10 verfügt über einen Schweissabschnitt 11, der hier jedoch nicht zentriert ist. In die Aufsetzfläche 12 kann eine lineare Ultraschallschwingung in der durch einen Doppelpfeil dargestellten Richtung eingeleitet werden. Die Masse des in der Figur rechts von der Schwingungsentkopplungszone 14 liegenden Bereichs beträgt weniger als 30 % der Masse des gesamten Bauteils 10.

Beim erfindungsgemässen Bauteil 10 gemäss Figur 11 ist der Schweissabschnitt 11 zentriert angeordnet, wobei hier jedoch eine torsionale Ultraschallschwingung eingeleitet werden soll, die durch einen gebogenen Doppelpfeil angedeutet ist. Bezüglich einer durch den Mittelpunkt M des Schweissabschnitt 11 verlaufenden Achse hat der innerhalb der Schwingungsentkopplungszone 14 liegende eingeschlossene Bereich 21 ein Trägheitsmoment, welches weniger als 30 % des Trägheitsmoments des gesamten Bauteils 10 bezüglich dieser Achse beträgt.

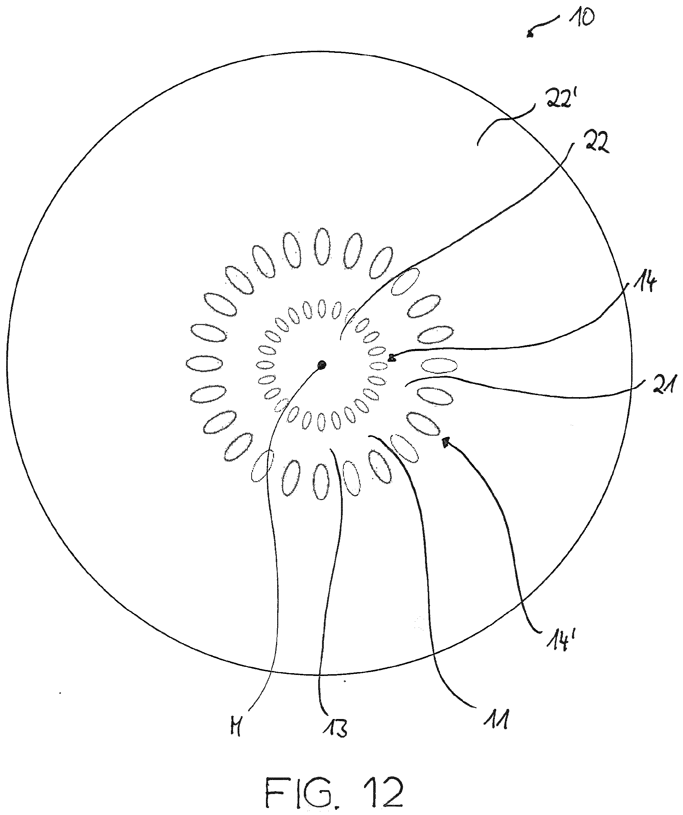

In Figur 12 hat das Bauteil 10 einen ringförmigen Schweissabschnitt 11, der eine innere ringförmige Schwingungsentkopplungszone 14 umgibt und selbst von einer äusseren ringförmigen Schwingungsentkopplungszone 14' umgeben ist. Hier ist der von den Schwingungsentkopplungszonen 14, 14' eingeschlossene Bereich 21 ringförmig. Der entkoppelte Bereich setzt sich aus einem innerhalb der inneren Schwingungsentkopplungszone 14 liegenden Bereich 22 und einem ausserhalb der äusseren Schwingungsentkopplungszone 14' liegenden ringförmigen Bereich 22' zusammen. Der Mittelpunkt M des Schweissabschnitts 11, also dessen Schwerpunkt, liegt selbst nicht im Schweissabschnitt 11, sondern im Bereich 22. Das bezüglich einer durch den Mittelpunkt M und senkrecht zur Schweissfläche 13 verlaufenden Achse A bestimmte Trägheitsmoment des von den Schwingungsentkopplungszonen 14 eingeschlossenen Bereichs beträgt weniger als 30 % des bezüglich der genannten Achse A gemessenen Trägheitsmoments des gesamten Bauteils 10.

Die hier offenbarten Ausführungsbeispiele reduzieren den Anteil der aus dem Schweissabschnitt herausgeleiteten Schwingungsenergie und sorgen somit für eine effizientere Nutzung der Schwingungsenergie und verringern das Risiko von Beschädigungen des restlichen Bauteils.

## Patentansprüche

1. Bauteil (10) zum Verbinden mit mindestens einem weiteren Bauteil (30, 30'), wobei
- das Bauteil (10) mindestens zwei mit mindestens einem der weiteren Bauteile (30, 30') individuell mittels eines Schwingungsschweissens, insbesondere mittels eines bevorzugt torsionalen Ultraschallschweissens, zu verschweissende Schweissabschnitte (11, 11') aufweist,
- jeder Schweissabschnitt (11, 11') eine jeweilige Schweissfläche (13, 13') zum Verbinden mit dem jeweiligen weiteren Bauteil (30, 30') aufweist und
- jeder Schweissabschnitt (11, 11') von jedem anderen Schweissabschnitt (11, 11') durch mindestens eine Schwingungsentkopplungszone (14, 14', 23, 26) räumlich getrennt ist.

2. Bauteil (10) gemäss Anspruch 1,
wobei jeder Schweissabschnitt (11, 11') vom restlichen Bauteil (10) durch mindestens eine Schwingungsentkopplungszone (14, 14', 23, 26) räumlich getrennt ist.

3. Bauteil (10) gemäss Anspruch 1 oder 2, wobei der Mittelpunkt (M) des Schweissabschnitts (11, 11') in einer zur Schweissfläche (13, 13') senkrechten Projektion einen Abstand (d) vom Schwerpunkt (S) des Bauteils (10) aufweist, wobei der Abstand (d, d') insbesondere mindestens 1 %, bevorzugt mindestens 2 %, besonders bevorzugt mindestens 5 % des bezüglich des Mittelpunkts (M, M') des Schweissabschnitts (11, 11') gemessenen Radius (r) des Bauteils (10) beträgt.

4. Bauteil (10) gemäss einem der vorhergehenden Ansprüche, wobei
- das bezüglich einer durch den Mittelpunkt (M, M') des Schweissabschnitts (11, 11') und senkrecht zur Schweissfläche (13, 13') verlaufenden Achse (A, A') bestimmte Trägheitsmoment des von der Schwingungsentkopplungszone (14, 14', 23, 26) eingeschlossenen Bereichs (21, 21') des Bauteils (10) höchstens 50 %, bevorzugt höchstens 40 %, besonders bevorzugt höchstens 30 % des bezüglich der genannten Achse (A) gemessenen Trägheitsmoments des gesamten Bauteils (10) beträgt, wobei insbesondere das Schwingungsschweissen ein torsionales Schwingungsschweissen ist,
und/oder
- die Masse des innerhalb der Schwingungsentkopplungszone (14, 14', 23, 26) liegenden eingeschlossenen Bereichs (21, 21') des Bauteils (10) höchstens 50 %, bevorzugt höchstens 40 %, weiter bevorzugt höchstens 30 %, besonders bevorzugt höchstens 1 % der Masse des gesamten Bauteils (10) beträgt, wobei insbesondere das Schwingungsschweissen ein lineares Schwingungsschweissen ist.

5. Bauteil (10) gemäss einem der vorhergehenden Ansprüche , wobei
der Schweissabschnitt (11, 11') vom restlichen Bauteil (10) durch die mindestens eine Schwingungsentkopplungszone (14, 14', 23, 26) derart räumlich getrennt ist, dass bei einer Schwingungsanregung des Bauteils (10) im Schweissabschnitt (11, 11') der Anteil der zeitlich gemittelten Schwingungsenergie des ausserhalb der Schwingungsentkopplungszone (14, 14', 23, 26) liegenden entkoppelten Bereichs (22, 22') des Bauteils (10) an der zeitlich gemittelten Schwingungsenergie des gesamten Bauteils (10) aufgrund der Schwingungsentkopplungszone (14, 14', 23, 26) von mehr als 50 %, bevorzugt mehr als 60 %, besonders bevorzugt mehr als 70 % auf weniger als 30 %, bevorzugt weniger als 20 %, besonders bevorzugt weniger als 10 % reduziert wird, insbesondere bei einer Schwingungsanregung
- mit mindestens einer Frequenz im Bereich von 10 kHz bis 50 kHz, bevorzugt im Bereich von 20 kHz bis 40 kHz, besonders bevorzugt mit einer Frequenz von etwa 20 kHz
und/oder
- mit mindestens einer Frequenz im Bereich von 150 Hz bis 250 Hz, bevorzugt mit einer Frequenz von etwa 200 Hz.

6. Bauteil (10) gemäss einem der vorangehenden Ansprüche, wobei mindestens eine der Schwingungsentkopplungszonen (23) eine federnde Struktur (23) enthält oder dadurch gebildet ist, mittels welcher die Ausbreitung von in einen Schweissabschnitt (11, 11'), insbesondere in einen ersten von mehreren Schweissabschnitten (11, 11'), eingeleiteten Schwingungen in einen zweiten Abschnitt (25), insbesondere in einen zweiten Schweissabschnitt, des Bauteils (10) zumindest teilweise verhindert wird.

7. Bauteil (10) gemäss einem der vorangehenden Ansprüche, wobei mindestens eine der Schwingungsentkopplungszonen (14, 14', 23, 26) durch mindestens eine Entkopplungsöffnung (19) und/oder mindestens eine Materialausdünnung gebildet ist.

8. Bauteil (10) gemäss einem der vorangehenden Ansprüche, wobei der Schwerpunkt (S) des Bauteils (10) ausserhalb der Schweissfläche (13, 13') liegt, insbesondere ausserhalb des Schweissabschnitts (11, 11').

9. Verfahren zum Verbinden eines Bauteils (10) gemäss einem der vorangehenden Ansprüche mit mindestens einem weiteren Bauteil (30, 30'), wobei der Schweissabschnitt (11, 11') des Bauteils (10), insbesondere jeder Schweissabschnitt (11, 11') des Bauteils (10), und/oder ein Schweissbereich (31, 31') des weiteren Bauteils (30, 31') eine Aufsetzfläche (12, 12') zum Kontakt mit einem Schwinger (70), insbesondere einer Sonotrode (70), insbesondere einer Torsionssonotrode (70), aufweist,
wobei das Verfahren die folgenden Schritte enthält:
a) Inkontaktbringen der Schweissfläche (13, 13') des Bauteils (10) mit einem Schweissbereich (31, 31') des weiteren Bauteils (30, 30'),
b) Ausüben einer Kraft mittels eines Schwingers (70), insbesondere einer Sonotrode (70), insbesondere einer Torsionssonotrode (70), auf die Aufsetzfläche (12, 12'), so dass die Schweissfläche (13, 13') und der Schweissbereich (31, 31') gegeneinandergedrückt werden und
c) Einleiten einer Schwingung, insbesondere einer Ultraschallschwingung, mittels des Schwingers (70), so dass die Schweissfläche (13, 13') mit dem Schweissbereich (31, 31') verschweisst wird.

10. Verfahren gemäss Anspruch 9,
wobei das Bauteil (10) gemäss einem der Ansprüche 3 bis 8 ausgebildet ist und im Schritt c) eine torsionale Schwingung, insbesondere eine torsionale Ultraschallschwingung, bezüglich einer Torsionsachse (T) eingeleitet wird, welche durch den Mittelpunkt (M) des Schweissabschnitts (11, 11') oder in einem Abstand (a) von höchstens 20 mm, bevorzugt höchstens 10 mm, besonders bevorzugt höchstens 5 mm davon verläuft.

11. Verfahren gemäss Anspruch 9,
wobei das Bauteil (10) gemäss einem der Ansprüche 3 bis 8 ausgebildet ist und im Schritt c) eine lineare Schwingung, insbesondere eine lineare Ultraschallschwingung, eingeleitet wird, wobei die senkrechte Projektion des Mittelpunkts (M) des Schweissabschnitts (11, 11') auf die Aufsetzfläche (12) im Mittelpunkt (P) einer Schweissfläche (71) des Schwingers (70) oder in einem Abstand (a) von höchstens 20 mm, bevorzugt höchstens 10 mm, besonders bevorzugt höchstens 5 mm davon liegt.

12. Verfahren gemäss einem der Ansprüche 9 bis 11,
wobei der Schwinger (70) eine Symmetrieachse (B) aufweist, welche durch den Mittelpunkt (M) des Schweissabschnitts (11, 11') oder in einem Abstand (a) von höchstens 20 mm, bevorzugt höchstens 10 mm, besonders bevorzugt höchstens 5 mm davon verläuft.

13. Verfahren gemäss einem der Ansprüche 9 bis 12,
wobei der Schwinger (70) eine Schwingung mit einer Frequenz einleitet, bei welcher die zeitlich gemittelte Schwingungsenergie des ausserhalb der Schwingungsentkopplungszone (14, 14', 23, 26) liegenden entkoppelten Bereichs (22) des Bauteils (10) aufgrund der Schwingungsentkopplungszone (14, 14', 23, 26) von mehr als 50 %, bevorzugt mehr als 60 %, besonders bevorzugt mehr als 70 % auf weniger als 30 %, bevorzugt weniger als 20 %, besonders bevorzugt weniger als 10 % reduziert wird.

14. Verfahren gemäss einem der Ansprüche 9 bis 13, wobei
die Schwingungsentkopplungszone (14, 14', 23, 26) in mindestens einer Richtung (R) in einem Abstand (b) von der Aufsetzfläche (12) angeordnet ist, der weniger als ein Achtel der Wellenlänge des Schwingers (70) im Bereich der Schweissfläche (13, 13') beträgt, wobei die Richtung (R) insbesondere senkrecht zur Aufsetzfläche (12) und/oder zur Schweissfläche (13, 13') verläuft, und wobei bevorzugt die Wellenlänge des Schwingers (70) im Bereich von 20 mm bis 35 mm liegt.

15. Verbundteil (90), erhalten oder erhältlich durch das Verschweissen eines Bauteils (10) gemäss einem der Ansprüche 1 bis 8 mit einem weiteren Bauteil (30, 30'), wobei die Schweissfläche (13, 13') mit einem Schweissbereich (31) des weiteren Bauteils (30, 30') verschweisst ist, insbesondere mittels bevorzugt torsionalen Ultraschallschweissens, insbesondere in einem Verfahren gemäss einem der Ansprüche 10 bis 14, wobei insbesondere das weitere Bauteil (30, 30') oder das Bauteil (10) ein Bauteil für ein Kraftfahrzeug, insbesondere ein Aussen- oder Innenverkleidungsteil eines Kraftfahrzeugs ist, beispielsweise ein Stossfänger, eine Seitenverkleidung, ein Spoiler, ein Dekorteil, ein Blindstopfen, eine Blende, ein Schweller, eine Bremskühlung oder eine Scheinwerferreinigungsanlage, und/oder das Bauteil (10) oder das weitere Bauteil (30, 30') ein Befestigungsmittel (10) zum Befestigen eines Funktionsteils, beispielsweise eines Sensors, insbesondere eines Abstandssensors oder zum Befestigen einer passiven Komponente, insbesondere eines Dekorteils, Blindstopfens oder einer Blende, ist.

## Claims

1. Component (10) for connecting to at least one further component (30, 30'),
- wherein the component (10) comprises at least two welding sections (11, 11') to be welded individually to at least one of the further components (30, 30') by means of vibration welding, in particular by means of a preferably torsional ultrasonic welding,
- each welding section (11, 11') comprises a respective welding surface (13, 13') for connecting to the respective further component (30, 30') and
- each welding section (11, 11') is spatially separated from every other welding section (11, 11') by at least one vibration decoupling zone (14, 14', 23, 26).

2. Component (10) according to claim 1, wherein each welding section (11, 11') is spatially separated from the rest of the component (10) by at least one vibration decoupling zone (14, 14', 23, 26).

3. Component (10) according to claim 1 or 2, wherein the centre point (M) of the welding section (11, 11') has a distance (d) from the centre of gravity (S) of the component (10) in a projection perpendicular to the welding surface (13, 13'), wherein the distance (d, d') is in particular at least 1%, preferably at least 2%, particularly preferably at least 5% of the radius (r) of the component (10) measured with respect to the centre point (M, M') of the welding section (11, 11').

4. Component (10) according to any one of the preceding claims, wherein
- the moment of inertia, determined with respect to an axis (A, A') extending through the centre point (M, M') of the welding section (11, 11') and perpendicular to the welding surface (13, 13'), of the region (21, 21') of the component (10) enclosed by the vibration decoupling zone (14, 14', 23, 26) is at most 50%, preferably at most 40%, particularly preferably at most 30% of the moment of inertia of the entire component (10) measured with respect to said axis (A), wherein in particular the vibration welding is a torsional vibration welding,
and/or
- the mass of the enclosed region (21, 21') of the component (10) lying within the vibration decoupling zone (14, 14', 23, 26) is at most 50%, preferably at most 40%, more preferably at most 30%, particularly preferably at most 1% of the mass of the entire component (10), wherein in particular the vibration welding is a linear vibration welding.

5. Component (10) according to any one of the preceding claims, wherein the welding section (11, 11') is spatially separated from the rest of the component (10) by the at least one vibration decoupling zone (14, 14', 23, 26) in such a way that, upon vibration excitation of the component (10) in the welding section (11, 11'), the proportion of the time-averaged vibration energy of the decoupled region (22, 22') of the component (10) lying outside the vibration decoupling zone (14, 14', 23, 26) to the time-averaged vibration energy of the entire component (10) is reduced due to the vibration decoupling zone (14, 14', 23, 26) from more than 50%, preferably more than 60%, particularly preferably more than 70% to less than 30%, preferably less than 20%, particularly preferably less than 10%, in particular upon a vibration excitation
- with at least one frequency in the range from 10 kHz to 50 kHz, preferably in the range from 20 kHz to 40 kHz, particularly preferably with a frequency of about 20 kHz
and/or
- with at least one frequency in the range from 150 Hz to 250 Hz, preferably with a frequency of about 200 Hz.

6. Component (10) according to any one of the preceding claims, wherein at least one of the vibration decoupling zones (23) contains or is formed by a resilient structure (23), by means of which the propagation of vibrations introduced into a welding section (11, 11'), in particular into a first of a plurality of welding sections (11, 11'), into a second section (25), in particular into a second welding section, of the component (10) is at least partially prevented.

7. Component (10) according to any one of the preceding claims, wherein at least one of the vibration decoupling zones (14, 14', 23, 26) is formed by at least one decoupling opening (19) and/or at least one material thinning.

8. Component (10) according to any one of the preceding claims, wherein the centre of gravity (S) of the component (10) lies outside the welding surface (13, 13'), in particular outside the welding section (11, 11').

9. Method for connecting a component (10) according to any one of the preceding claims to at least one further component (30, 30'), wherein the welding section (11, 11') of the component (10), in particular each welding section (11, 11') of the component (10), and/or a welding region (31, 31') of the further component (30, 31') comprises a contact surface (12, 12') for contact with a vibrator (70), in particular a sonotrode (70), in particular a torsion sonotrode (70), the method comprising the following steps:
a) bringing the welding surface (13, 13') of the component (10) into contact with a welding region (31, 31') of the further component (30, 30'),
b) exerting a force by means of a vibrator (70), in particular a sonotrode (70), in particular a torsion sonotrode (70), onto the contact surface (12, 12'), such that the welding surface (13, 13') and the welding region (31, 31') are pressed against each other and
c) introducing a vibration, in particular an ultrasonic vibration, by means of the vibrator (70), such that the welding surface (13, 13') is welded to the welding region (31, 31').

10. Method according to claim 9, wherein the component (10) is configured according to any one of claims 3 to 8 and in step c) a torsional vibration, in particular a torsional ultrasonic vibration, is introduced with respect to a torsion axis (T) which extends through the centre point (M) of the welding section (11, 11') or at a distance (a) of at most 20 mm, preferably at most 10 mm, particularly preferably at most 5 mm therefrom.

11. Method according to claim 9, wherein the component (10) is configured according to any one of claims 3 to 8 and in step c) a linear vibration, in particular a linear ultrasonic vibration, is introduced, wherein the perpendicular projection of the centre point (M) of the welding section (11, 11') onto the contact surface (12) lies at the centre point (P) of a welding surface (71) of the vibrator (70) or at a distance (a) of at most 20 mm, preferably at most 10 mm, particularly preferably at most 5 mm therefrom.

12. Method according to any one of claims 9 to 11, wherein the vibrator (70) has an axis of symmetry (B) which extends through the centre point (M) of the welding section (11, 11') or at a distance (a) of at most 20 mm, preferably at most 10 mm, particularly preferably at most 5 mm therefrom.

13. Method according to any one of claims 9 to 12, wherein the vibrator (70) introduces a vibration with a frequency at which the time-averaged vibration energy of the decoupled region (22) of the component (10) lying outside the vibration decoupling zone (14, 14', 23, 26) is reduced due to the vibration decoupling zone (14, 14', 23, 26) from more than 50%, preferably more than 60%, particularly preferably more than 70% to less than 30%, preferably less than 20%, particularly preferably less than 10%.

14. Method according to any one of claims 9 to 13, wherein the vibration decoupling zone (14, 14', 23, 26) is arranged in at least one direction (R) at a distance (b) from the contact surface (12) which is less than one eighth of the wavelength of the vibrator (70) in the region of the welding surface (13, 13'), wherein the direction (R) extends in particular perpendicular to the contact surface (12) and/or to the welding surface (13, 13'), and wherein preferably the wavelength of the vibrator (70) is in the range from 20 mm to 35 mm.

15. Composite part (90), obtained or obtainable by welding a component (10) according to any one of claims 1 to 8 to a further component (30, 30'), wherein the welding surface (13, 13') is welded to a welding region (31) of the further component (30, 30'), in particular by means of preferably torsional ultrasonic welding, in particular in a method according to any one of claims 10 to 14, wherein in particular the further component (30, 30') or the component (10) is a component for a motor vehicle, in particular an exterior or interior trim part of a motor vehicle, for example a bumper, a side trim, a spoiler, a decorative part, a blanking plug, a cover, a sill, a brake cooling system or a headlamp cleaning system, and/or the component (10) or the further component (30, 30') is a fastening means (10) for fastening a functional part, for example a sensor, in particular a distance sensor, or for fastening a passive component, in particular a decorative part, a blanking plug or a cover.

## Revendications

1. Composant (10) pour la liaison avec au moins un autre composant (30, 30'),
- dans lequel le composant (10) présente au moins deux sections de soudage (11, 11') à souder individuellement à au moins l'un des autres composants (30, 30') au moyen d'un soudage par vibration, en particulier au moyen d'un soudage par ultrasons de préférence en torsion,
- chaque section de soudage (11, 11') présentant une surface de soudage (13, 13') respective pour la liaison avec l'autre composant (30, 30') respectif et
- chaque section de soudage (11, 11') étant séparée spatialement de chaque autre section de soudage (11, 11') par au moins une zone de découplage de vibrations (14, 14', 23, 26).

2. Composant (10) selon la revendication 1, dans lequel chaque section de soudage (11, 11') est séparée spatialement du reste du composant (10) par au moins une zone de découplage de vibrations (14, 14', 23, 26).

3. Composant (10) selon la revendication 1 ou 2, dans lequel le point central (M) de la section de soudage (11, 11') présente, dans une projection perpendiculaire à la surface de soudage (13, 13'), une distance (d) par rapport au centre de gravité (S) du composant (10), la distance (d, d') étant en particulier d'au moins 1 %, de préférence d'au moins 2 %, de manière particulièrement préférée d'au moins 5 % du rayon (r) du composant (10) mesuré par rapport au point central (M, M') de la section de soudage (11, 11').

4. Composant (10) selon l'une quelconque des revendications précédentes, dans lequel
- le moment d'inertie, déterminé par rapport à un axe (A, A') passant par le point central (M, M') de la section de soudage (11, 11') et perpendiculaire à la surface de soudage (13, 13'), de la région (21, 21') du composant (10) enclose par la zone de découplage de vibrations (14, 14', 23, 26) est d'au plus 50 %, de préférence d'au plus 40 %, de manière particulièrement préférée d'au plus 30 % du moment d'inertie de l'ensemble du composant (10) mesuré par rapport audit axe (A), le soudage par vibration étant en particulier un soudage par vibration en torsion, et/ou
- la masse de la région enclose (21, 21') du composant (10) se trouvant à l'intérieur de la zone de découplage de vibrations (14, 14', 23, 26) est d'au plus 50 %, de préférence d'au plus 40 %, de manière davantage préférée d'au plus 30 %, de manière particulièrement préférée d'au plus 1 % de la masse de l'ensemble du composant (10), le soudage par vibration étant en particulier un soudage par vibration linéaire.

5. Composant (10) selon l'une quelconque des revendications précédentes, dans lequel la section de soudage (11, 11') est séparée spatialement du reste du composant (10) par l'au moins une zone de découplage de vibrations (14, 14', 23, 26) de telle sorte que, lors d'une excitation de vibrations du composant (10) dans la section de soudage (11, 11'), la part de l'énergie de vibration moyennée dans le temps de la région découplée (22, 22') du composant (10) se trouvant à l'extérieur de la zone de découplage de vibrations (14, 14', 23, 26) par rapport à l'énergie de vibration moyennée dans le temps de l'ensemble du composant (10) est réduite, en raison de la zone de découplage de vibrations (14, 14', 23, 26), de plus de 50 %, de préférence de plus de 60 %, de manière particulièrement préférée de plus de 70 % à moins de 30 %, de préférence à moins de 20 %, de manière particulièrement préférée à moins de 10 %, en particulier lors d'une excitation de vibrations
- avec au moins une fréquence dans la plage de 10 kHz à 50 kHz, de préférence dans la plage de 20 kHz à 40 kHz, de manière particulièrement préférée avec une fréquence d'environ 20 kHz
et/ou
- avec au moins une fréquence dans la plage de 150 Hz à 250 Hz, de préférence avec une fréquence d'environ 200 Hz.

6. Composant (10) selon l'une quelconque des revendications précédentes, dans lequel au moins l'une des zones de découplage de vibrations (23) contient ou est formée par une structure élastique (23), au moyen de laquelle la propagation de vibrations introduites dans une section de soudage (11, 11'), en particulier dans une première parmi plusieurs sections de soudage (11, 11'), dans une seconde section (25), en particulier dans une seconde section de soudage, du composant (10) est au moins partiellement empêchée.

7. Composant (10) selon l'une quelconque des revendications précédentes, dans lequel au moins l'une des zones de découplage de vibrations (14, 14', 23, 26) est formée par au moins une ouverture de découplage (19) et/ou au moins un amincissement de matériau.

8. Composant (10) selon l'une quelconque des revendications précédentes, dans lequel le centre de gravité (S) du composant (10) se situe à l'extérieur de la surface de soudage (13, 13'), en particulier à l'extérieur de la section de soudage (11, 11').

9. Procédé pour relier un composant (10) selon l'une quelconque des revendications précédentes à au moins un autre composant (30, 30'), la section de soudage (11, 11') du composant (10), en particulier chaque section de soudage (11, 11') du composant (10), et/ou une zone de soudage (31, 31') de l'autre composant (30, 31') présentant une surface d'appui (12, 12') pour le contact avec un vibrateur (70), en particulier une sonotrode (70), en particulier une sonotrode de torsion (70), le procédé comprenant les étapes suivantes :
a) la mise en contact de la surface de soudage (13, 13') du composant (10) avec une zone de soudage (31, 31') de l'autre composant (30, 30'),
b) l'exercice d'une force au moyen d'un vibrateur (70), en particulier d'une sonotrode (70), en particulier d'une sonotrode de torsion (70), sur la surface d'appui (12, 12'), de sorte que la surface de soudage (13, 13') et la zone de soudage (31, 31') sont pressées l'une contre l'autre et
c) l'introduction d'une vibration, en particulier d'une vibration ultrasonore, au moyen du vibrateur (70), de sorte que la surface de soudage (13, 13') est soudée à la zone de soudage (31, 31').

10. Procédé selon la revendication 9, dans lequel le composant (10) est configuré selon l'une quelconque des revendications 3 à 8 et, à l'étape c), une vibration de torsion, en particulier une vibration ultrasonore de torsion, est introduite par rapport à un axe de torsion (T) qui passe par le point central (M) de la section de soudage (11, 11') ou à une distance (a) d'au plus 20 mm, de préférence d'au plus 10 mm, de manière particulièrement préférée d'au plus 5 mm de celui-ci.

11. Procédé selon la revendication 9, dans lequel le composant (10) est configuré selon l'une quelconque des revendications 3 à 8 et, à l'étape c), une vibration linéaire, en particulier une vibration ultrasonore linéaire, est introduite, la projection perpendiculaire du point central (M) de la section de soudage (11, 11') sur la surface d'appui (12) se situant au point central (P) d'une surface de soudage (71) du vibrateur (70) ou à une distance (a) d'au plus 20 mm, de préférence d'au plus 10 mm, de manière particulièrement préférée d'au plus 5 mm de celui-ci.

12. Procédé selon l'une quelconque des revendications 9 à 11, dans lequel le vibrateur (70) présente un axe de symétrie (B) qui passe par le point central (M) de la section de soudage (11, 11') ou à une distance (a) d'au plus 20 mm, de préférence d'au plus 10 mm, de manière particulièrement préférée d'au plus 5 mm de celui-ci.

13. Procédé selon l'une quelconque des revendications 9 à 12, dans lequel le vibrateur (70) introduit une vibration avec une fréquence à laquelle l'énergie de vibration moyennée dans le temps de la région découplée (22) du composant (10) se trouvant à l'extérieur de la zone de découplage de vibrations (14, 14', 23, 26) est réduite, en raison de la zone de découplage de vibrations (14, 14', 23, 26), de plus de 50 %, de préférence de plus de 60 %, de manière particulièrement préférée de plus de 70 % à moins de 30 %, de préférence à moins de 20 %, de manière particulièrement préférée à moins de 10 %.

14. Procédé selon l'une quelconque des revendications 9 à 13, dans lequel la zone de découplage de vibrations (14, 14', 23, 26) est agencée dans au moins une direction (R) à une distance (b) de la surface d'appui (12) qui est inférieure à un huitième de la longueur d'onde du vibrateur (70) dans la région de la surface de soudage (13, 13'), la direction (R) s'étendant en particulier perpendiculairement à la surface d'appui (12) et/ou à la surface de soudage (13, 13'), et la longueur d'onde du vibrateur (70) étant de préférence dans la plage de 20 mm à 35 mm.

15. Pièce composite (90), obtenue ou pouvant être obtenue par le soudage d'un composant (10) selon l'une quelconque des revendications 1 à 8 à un autre composant (30, 30'), la surface de soudage (13, 13') étant soudée à une zone de soudage (31) de l'autre composant (30, 30'), en particulier au moyen d'un soudage par ultrasons de préférence en torsion, en particulier dans un procédé selon l'une quelconque des revendications 10 à 14, l'autre composant (30, 30') ou le composant (10) étant en particulier un composant pour un véhicule automobile, en particulier une pièce de garniture extérieure ou intérieure d'un véhicule automobile, par exemple un pare-chocs, une garniture latérale, un spoiler, une pièce décorative, un bouchon d'obturation, un enjoliveur, un bas de caisse, un refroidissement de frein ou une installation de lave-phares, et/ou le composant (10) ou l'autre composant (30, 30') étant un moyen de fixation (10) pour fixer une pièce fonctionnelle, par exemple un capteur, en particulier un capteur de distance, ou pour fixer un composant passif, en particulier une pièce décorative, un bouchon d'obturation ou un enjoliveur.
